# EUROPEAN PATENT APPLICATION

(11) **EP 3 869 328 A1**
(43) Date of publication of application: **25.08.2021**
(21) Application number: 20158484.4
(22) Date of filing: 20.02.2020
(51) Int. Cl.: G06F 8/34, G06F 11/36, G06F 3/048, G06Q 10/06, G05B 19/00

(54) **SYSTEM, DEVICE AND METHOD FOR DEBUGGING AN INDUSTRIAL APPLICATION**

(71) Applicant: Siemens Aktiengesellschaft, 80333 München (DE)
(72) Inventor: Nagel, Hauke, 76139 Karlsruhe (DE)

(57) **Abstract**

System, device and method for debugging an industrial application is disclosed. The industrial application is configured to control at least one process and asset (582) in an automation environment (580). The method includes configuring one or more functions (122-126, 542) of the industrial application as an executable workflow whereby the industrial application is at least partly executed by the functions; and validating execution of the industrial application using a debug dataset (132, 544) without reconfiguring the functions.

## Description

The present invention relates to industrial applications for managing an automation environment. Particularly, the present invention relates to debugging the industrial applications.

Field devices in an automation environment may be, for example, actuators (e.g. valves, switches) and sensors (e.g., temperature, pressure, level sensors and flow meters). These field devices are located within the automation environment and perform process functions such as opening or closing valves, measuring process parameters, etc. The data associated with the field devices are used by industrial applications to monitor and manage the automation environment.

Example of such industrial applications include condition monitoring applications, fault diagnostic applications, remain life prediction applications etc. Such applications may be built by combining one or more modules using a development environment. To ensure that the applications perform as expected, the applications are debugged. To debug the application, an input dataset may be used to reconfigure one or more modules of the application. Such reconfiguration may be cumbersome as the dataset may need input manually.

Therefore, such debugging mechanisms may benefit from improvements.

In an example, a method for debugging an industrial application is disclosed. The industrial application is configured to control at least one process and asset in an automation environment. The method comprising and/or initiating configuring one or more functions of the industrial application as an executable workflow whereby the industrial application is at least partly executed by the functions; and validating execution of the industrial application using a debug dataset without reconfiguring the functions.

In another example, an apparatus for debugging an industrial application is disclosed. The apparatus comprising at least one processor; a memory unit communicatively coupled to the processor, wherein the memory unit comprises an integrated development module configured to generate an integrated development environment, wherein the integrated development environment is used for configuring one or more functions of the industrial application as an executable workflow whereby the industrial application is at least partly executed by the functions and validating execution of the industrial application using a debug dataset without reconfiguring the functions.

In yet another example, a system for debugging an industrial application is disclosed. The system comprising the apparatus as disclosed above and a computing platform communicatively coupled to the apparatus. The computing platform is configured to associate the graphical elements with one or more parameters of the asset and/or the process; enable performance at least one operation using the at least one apparatus employing the parameters, wherein the operation comprises at least one of modifying values of the parameters, changing the parameters, analyzing the parameters and transmitting the parameters.

A further example may include a non-transitory computer readable medium encoded with executable instructions (such as a software component on a storage device) that when executed, causes at least one processor to carry out this described method.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

The assets may be control devices, sensors, actuators. For example, Computer Numerical Control (CNC) machines, automation systems in an industrial production facility, motors, generators and the like. The automation environment refers to a facility that for manufacture, production that may be semi or completely automated. For example, industrial automation environment, laboratory automation environment, building automation environment and the like. Further, according to the present invention, automation environment may include a combination of one or more industrial automation environments, laboratory automation environments, building automation environments.

As used herein "application" refers to software code that is used to perform a function using data from the automation environment. For example, the application is a web-based condition monitoring application configured to monitor condition of the assets in the automation environment. The application may be hosted on one or more devices. The present invention relates to development of such an application. Further, the present invention enables a developer of the application to effectively test and debug the application with minimal time consumption.

To enable development of the application, the application is represented as an executable workflow. As used herein, the executable workflow refers to one or more functions of the application that may be executed either wholly or partially. During runtime of the application the functions may be executed for the application to perform the expected activity. In an embodiment, the executable workflow may be an executable graphical model. In the executable graphical model, the functions may be displayed as one or more graphical elements such as nodes in a workflow editor. An example editor is an integrated development environment that can assist in writing software code with language specific code building functions and checking for errors/bugs as application is being built. Another example editor may be a flow creator configured to enable to execute functions without extracting the software code associated with the functions. Accordingly, the present invention advantageously applies to different types of editors.

The graphical elements may be configured based on parameters of the assets and/or parameters of one or more processes in the automation environment. For example, a graphical element may represent that the illustrated function may be configured to extract timeseries data from a temperature sensor in the automation environment. In the example, extraction of the timeseries data may be considered/referred to as the operations performed by the function. To enable performance of operation associated with the function, the method may include associating the graphical elements with one or more parameters of the assets and/or the process. Such association may be made in prior on a remote computing platform. The association may be in relation to an activity to be performed using the parameters. For example, sending process data to a predefined email address.

As used herein, "operation" refers to the logic that the functions execute. For example, operations include modifying values of the asset parameters and/or the process parameters, analyzing the parameters, changing the parameters, transmitting the parameters et cetera. Accordingly, the method may include performing at least one operation using the parameters whereby the functions are executed. The method may also include performing the operation by dragging an input dataset onto at least one of functions. The input dataset may include a predetermined dataset associated with a predetermined operating condition of the asset and/or the process, and an intermediate dataset generated from at least one function of the one or more functions.

To debug the application the functions are validated using the debug dataset. As used herein, "debug dataset" refers to a predetermined dataset associated with a predefined operating condition of the asset and/or the process in the automation environment. For example, the debug dataset includes vibration data points associated with misalignment in a motor (asset). In the example, special misalignment is considered to be the predefined operating condition of the asset. The present invention advantageously enables a person developing the industrial application to validate whether the application is able to identify the predefined operating conditions without cumbersome reconfiguration.

The input dataset and the debug dataset may be comparable or the same. The difference in terms indicate the stage at which the datasets are used in the build of the industrial application. If the dataset is used merely for execution of the workflow without intent to debug then the term input dataset is relevant. In the event that there is an intention to debug, the term debug dataset is relevant. The present invention applies to both the contexts.

In an embodiment, the method may include executing the functions using the predetermined dataset and determining an execution condition based on the execution of the functions. The execution condition indicates condition of the asset and/or process when the functions are executed using the predetermined dataset. The method may also include comparing the execution condition with the predetermined operating condition. Further, the method may also include determining at least one erroneous function of the one or more functions based on the comparison. In an embodiment, the integrated development environment of the apparatus is configured to perform the above method steps.

In an embodiment, the debug dataset may also include an intermediate dataset that is generated from at least one function of the one or more functions. The method may include generating the debug dataset including the intermediate dataset using the integrated development environment.

For example, the industrial application includes two functions 'inject timeseries data' and extract data above threshold'. The output of the extract function may be identified as incorrect. Therefore, the intermediate dataset generated from the inject function may be dragged onto the extract function to validate its operation. Accordingly, the method may include dragging the debug dataset onto at least one function of the one or more functions. The at least one function is configured when the debug dataset is dropped on the at least one function. The apparatus may include an interactive display unit with a Graphical User Interface (GUI) to enable the debug dataset to be dropped onto at least one other function.

As used herein "configured" refers to injecting the debug dataset as the input data for the at least one function. Accordingly, the method may include retaining the static values of the functions and injecting the debug dataset as the input data to validate at least one of the one or more functions.

The present invention advantageously simplifies debugging of industrial applications. The example of the drag and drop action can be performed by similar gesture-based interactions with the interactive display unit. Therefore, a developer can debug applications effectively and with minimal time consumption. Further, the technical expertise required for the debugging is minimal as simple gesture-based steps may be used for the same.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a visual representation of an integrated development environment, according to an embodiment of the present invention;
- Figs. 2-4: illustrate visual representations of operation of an integrated development environment, according to an embodiment of the present invention;
- Fig. 5: illustrates a system and apparatus for debugging an industrial application, according to an embodiment of the present invention; and
- Fig. 6: illustrates a method for debugging an industrial application, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

As used herein below automation environment refers to an environment that includes multiple devices and assets. The devices may include interface devices, control devices, edge devices, Internet of Things (IoT) enabled devices, which collect data from various sensors and/or actuators deployed in the automation environment. It will be understood by a person skilled in the art that the automation environment is not only the physical entities but also the logical entities that define relationship between the devices and assets. Example automation environments include industrial automation environments with process automation and quality analytics. Other automation environments include milling and engineering automation environment, laboratory automation environment, building automation environment, etc.

Assets refer to systems and devices in the automation environment. The assets may be remotely located from the IoT platform. For example, the assets can be equipments, sensors, actuators, robots, machinery in an industrial automation environment. The assets can also be medical devices and equipments in a healthcare automation environment. Furthermore, the assets can be home appliances or office appliances or systems in a building automation environment.

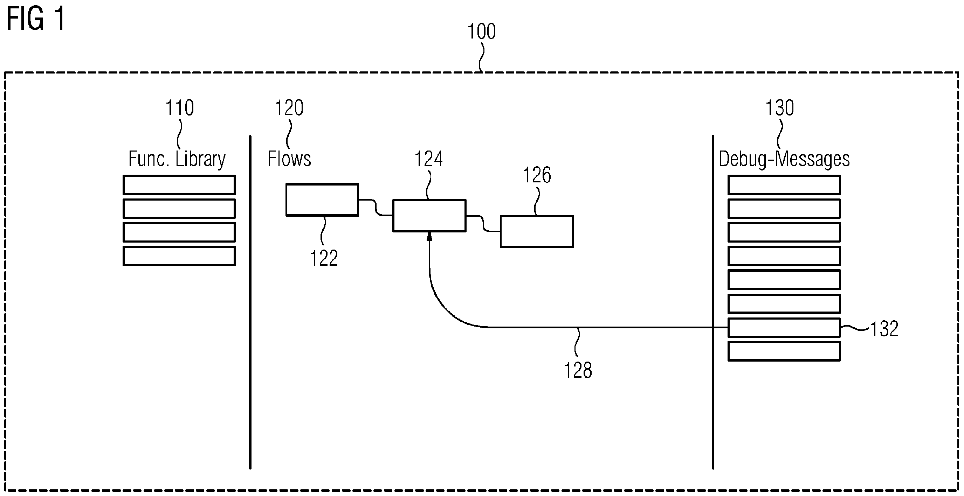

Fig. 1 illustrates a visual representation of an Integrated Development Environment (IDE) 100, according to an embodiment of the present invention. The IDE 100 includes three categories of fields i.e. function library 110, function flow 120 and debug messages 130. The function library 110 illustrates one of the templates of the different functions supported by the IDE 100. For example, templates for inject function, read function, extract function, write function et cetera may be indicated in the function library 110. Further, the function library 110 may be linked to a mapping database that maps the function types to parameters associated with assets and/or processes in the automation environment. To ensure consistency and availability of the functions, updated functions may be reflected in the function library 110.

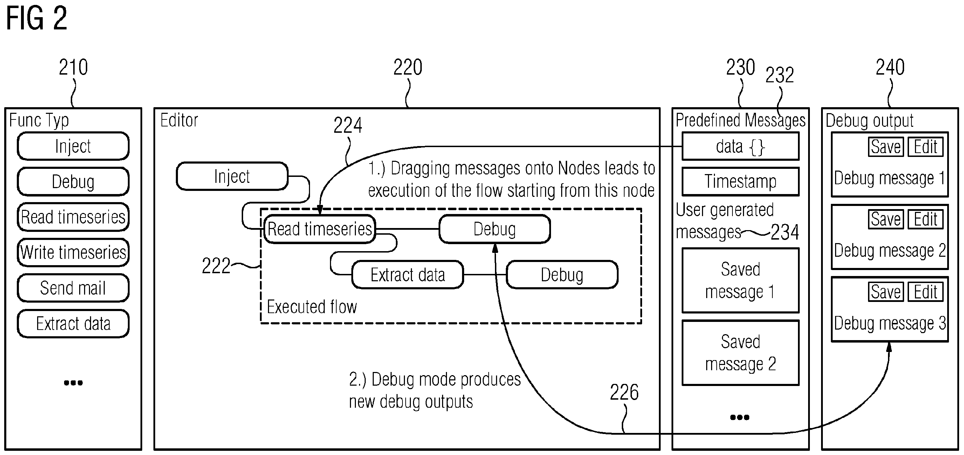

The function flow 120 indicates the logic that is executed by an industrial application. The function flow 120 includes a combination of one or more functions 122-126. In an embodiment, the functions 122-126 may be referred to as nodes. A complete function flow 120 may include all necessary meta data and may be tagged with a unique identification. The debug messages 130 may be linked to short-term or persistent storage in which the data such as manually created data and pre-defined configurations can be stored. In operation a debug message 132 may be injected as input to the function 124. The injection may be performed by a simple drag and drop action indicated by arrow 128. Fig. 1 is a generated example of an IDE used to debug an industrial application. Figs 2-4 illustrate specific example of an IDE in operation.

Figs. 2-4 illustrate visual representations of operation of an IDE, according to an embodiment of the present invention. The IDE includes multiple windows 210-240 indicating different interactive operations that may be performed to build and develop an industrial application. The windows include an information window 210, an editor window 220, a message window 230 and a debug window 240.

The information window 210 includes a function library with templates of the functions supported by the IDE. The information window 210 may indicate properties of a selected function (not shown in Fig. 2). Further, in some embodiments, the information window 210 may indicate information on usage of the function (not shown in Fig. 2). The editor window 220 is used to build an industrial application. The industrial application is built by creating a function flow with a combination of one or more functions. For example, the function flow is generated by dragging and dropping an input node that is the inject function in the editor window 220. The inject function may trigger data into the function flow. Other functions may be added and linked to the inject function. For example, read timeseries function may be linked to the inject function to enable the application to read the data input from the inject function.

The message window 230 includes predefined messages 232 and user generated messages 234. The message window 230 is a message library linked to a long-term store that is configured to store predefined configurations such as predefined condition associated with the assets in the automation environment. The user generated messages 234 may be generated during the development of the application and may also be stored in the long-term store. The debug window 240 displays debug messages of the functions in the editor window 220. In an embodiment, the debug window 240 may include a filter function to filter messages for ease in viewing.

Fig. 2 illustrates two steps that may be performed using the IDE. The first step 224 is performed by dragging messages from the predefined messages 232 to the read function. By dragging the message a new execution flow 222 may be created. The new execution flow 222 indicates that by dragging the messages execution of the flow is triggered from the read function. In the second step 226, the debug function in the execution flow 222 enables data from the read function to be sent to the debug window 240. The debug messages may be saved to the user generated messages 234 and/or edited.

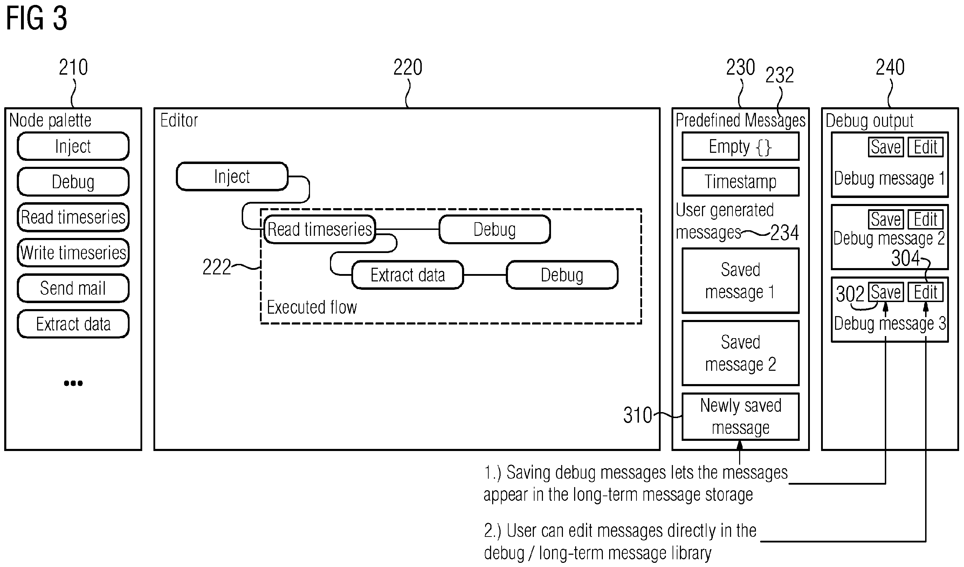

Fig. 3 illustrates the operations that may be performed by a user to enable access and edit the debug messages. Each debug message may be saved using a save icon 302 and edited using an edit icon 304. The debug messages may be saved as a user generated message 310. By saving debug messages, the message may appear in the long-term storage. The edit icon 304 enables a user to edit the debug messages directly in the debug window 240 or in the message window 230.

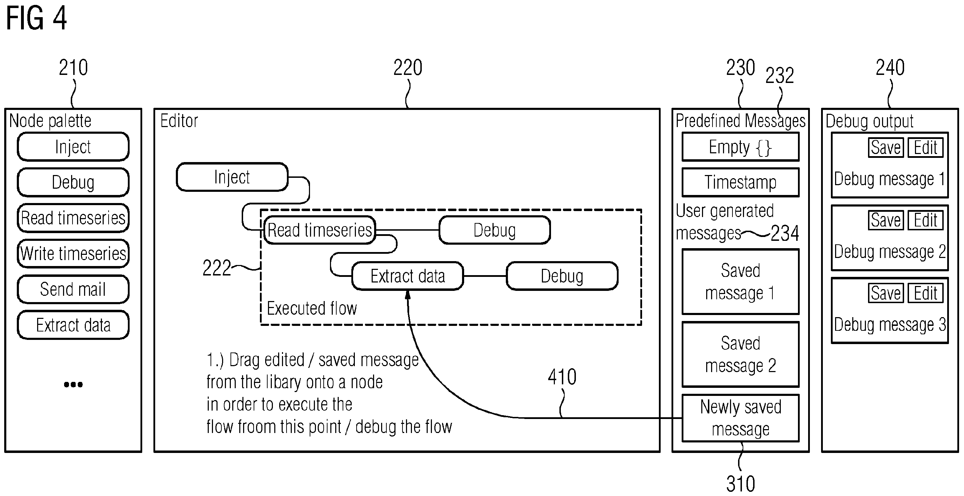

Fig. 4 illustrates that the edited/saved message 310 may be used to execute the function flow. The arrow 410 illustrates that the saved message 310 is dragged onto the extract function in order to execute the function flow with the extract function as the starting point.

Figs. 2-4 illustrates the simple solution to debug an industrial application. The 'Drag and Drop' operation is an illustrative operation. A person skilled in the art will be aware that the present invention may be implemented by similar gesture based, interactive operations.

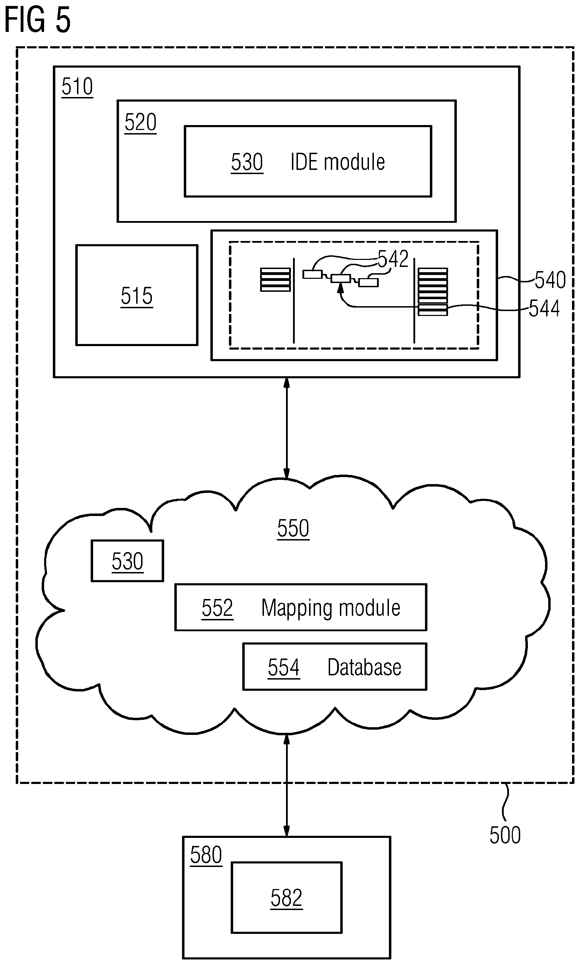

Fig. 5 illustrates a system 500 and apparatus 510 for debugging an industrial application. the industrial application is configured to control at least one process and asset 582 in an automation environment 580. according to an embodiment of the present invention.

To enable development and debugging of the application, the application is represented as an executable workflow with one or more functions. In the present embodiment, the executable workflow is an executable graphical model. In the executable graphical model, the functions may be displayed as one or more graphical elements. The graphical elements may be configured based on parameters of the asset 582 and/or parameters of one or more processes in the automation environment 580.

The industrial application may be built using the apparatus 510. To build the industrial application, the apparatus 510 may include a processor 515 and a memory 520. The processor 515 is configured to execute instructions in the memory 520. The instructions may be in the form of a module such as an Integrated Development module referred as IDE module 530. The apparatus also includes an interactive display unit 540 that is configured to illustrate the Integrated Development Environment (IDE) using a Graphical User Interface (GUI).

The system 500 also includes a computing platform 550 communicatively coupled to the apparatus 510. In the present embodiment, the computing platform is a cloud computing platform. As used herein cloud computing platform refers to distributed compute resources distributed and connected by means of a communication network.

The computing platform 550 is configured to execute one or more functions that enable the present invention. For the execution, the computing platform 550 includes a mapping module 552 and a database 554. The mapping module 552 is configured to associate the graphical elements with one or more parameters of the asset 582 and/or the process in the automation environment 580. The database 554 may be used as a long-term storage for the apparatus 510. Further, the database 554 may be used to store the association of graphical elements to the parameters from the automation environment 580.

In an embodiment, the IDE module 530 is executed on the computing platform 550. Accordingly, in such an embodiment, the apparatus 510 may not store the IDE module 530 in the memory 520. The industrial application may be built by accessing the IDE hosted on the computing platform 550 via the GUI displayed on the display 540.

The IDE is displayed on the display unit 540 indicates the functions 542 and debug messages 544. The execution of the functions 542 may be done using a predetermined dataset stored as a debug message 544. When the functions 542 are executed with the predetermined dataset the output of the functions 542 is referred as an execution condition. The execution condition indicates condition of the asset and/or process when the functions 542 are executed using the predetermined dataset. The predetermined dataset is associated with a predetermined condition. In certain scenarios the predetermined dataset may be generated in real-time based on outputs from the functions 542. The IDE module 530 is configured to compare the execution condition with the predetermined operating condition. Based on the comparison, at least one erroneous function of the one or more functions 542 may be determined by the processor 515.

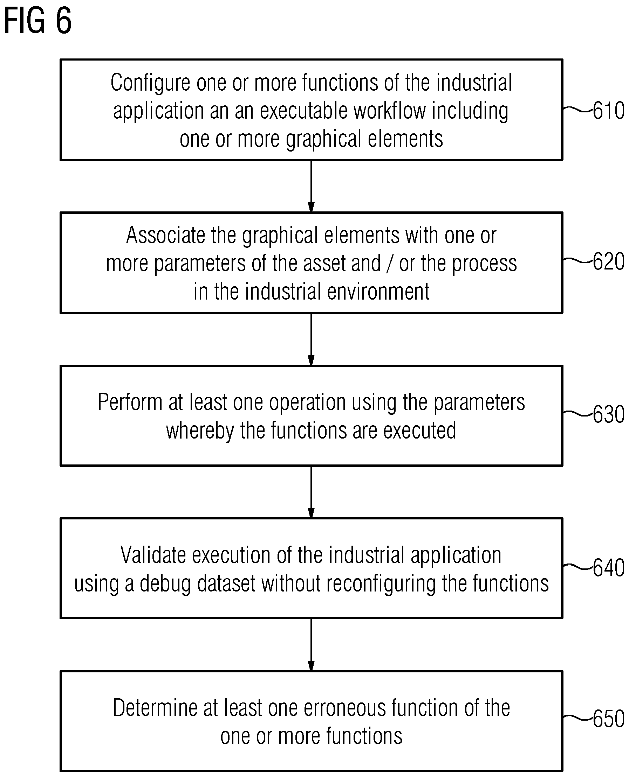

Fig. 6 illustrates a method for debugging an industrial application, according to an embodiment of the present invention. The industrial application is used to control or manage an automation environment including assets. Further, the assets may be used to run multiple processes in the automation environment. The method begins at step 610 by configuring one or more functions of the industrial application as an executable workflow including one or more graphical elements.

At step 620 the graphical elements are associated with one or more parameters of the asset and/or the process in the automation environment. For example, the graphical elements may be associated with pressure or temperature ambient in the automation environment.

At step 630 at least one function is executed by performing an operation using the parameters without reconfiguring the functions. For example, static values of the functions are retained while injecting the debug dataset as the input data. In an embodiment, an input dataset is dragged onto the functions and dropped. The action of dropping triggers injection of the input dataset as the input data and initiates execution of the workflow from the function where the input dataset was dropped.

In an embodiment, the input dataset may be referred to as a debug dataset. The debug dataset may include predefined datapoints associated with a predefined condition or the assets and/or the processes. In other embodiments, the debug dataset may be generated from output of one or more functions in the workflow.

The present step advantageously overcomes the cumbersome requirement of configuring functions in the prior art. There exists no requirement of creating a new function and inputting the dataset manually to execute the new function.

At step 640 execution of the functions is validated using the debug dataset. The validation is performed by comparing output when the dataset is dropped onto the function versus the predefined condition that is expected.

At step 650 at least one erroneous function of the one or more functions is identified based on the validation. The validation also confirms that the executable workflow works correctly, and the built industrial application is ready for use. Accordingly, the present method simplifies the process of debugging an application.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method for debugging an industrial application, wherein the industrial application is configured to control at least one process and asset (582) in an automation environment (580), the method comprising and/or initiating:
configuring one or more functions (122-126, 542) of the industrial application as an executable workflow whereby the industrial application is at least partly executed by the functions; and
validating execution of the industrial application using a debug dataset (132, 544) without reconfiguring the functions.

2. The method according to claim 1, wherein the executable workflow is an executable graphical model, wherein the functions (122-126, 542) includes one or more graphical elements to be displayed on a display device and wherein the method comprising and/or initiating:
associating the graphical elements with one or more parameters of the asset (582) and/or the process; and
performing at least one operation using the parameters whereby the functions (122-126, 542) are executed without reconfiguring the functions (122-126, 542), wherein the operation comprises at least one of modifying values of the parameters, changing the parameters, analyzing the parameters and transmitting the parameters, wherein the at least one operation is performed by dragging an input dataset onto at least one of functions (122-126, 542) and wherein the input dataset comprises a predetermined dataset associated with a predetermined operating condition of the asset (582) and/or the process, and an intermediate dataset generated from at least one function of the one or more functions (122-126, 542) .

3. The method according to one of the preceding claims, wherein the debug dataset (132, 544) comprises a predetermined dataset associated with a predetermined operating condition of the asset (582) and/or the process and wherein the validating execution of the industrial application comprises:
executing the one or more functions (122-126, 542) using the predetermined dataset (232);
determining an execution condition based on the execution of the functions, wherein the execution condition indicates condition of the asset (582) and/or process when the functions (122-126, 542) are executed using the predetermined dataset; and
comparing the execution condition with the predetermined operating condition; and
determining at least one erroneous function of the one or more functions (122-126, 542) based on the comparison.

4. The method according to one of the preceding claims, wherein the debug dataset (132, 544) comprises an intermediate dataset generated from at least one function of the one or more functions (122-126, 542) and wherein the validating execution of the industrial application comprises:
selecting the intermediate dataset; and
executing a second function of the one or more functions (122-126, 542) using the intermediate dataset.

5. The method according to one of the preceding claims, wherein validating execution of the industrial application using a debug dataset (132, 544) without reconfiguring the functions (122-126, 542) comprises:
dragging the debug dataset (132, 544) onto at least one function of the one or more functions, wherein the at least one function is configured when the debug dataset (132, 544) is dropped on the at least one function.

6. The method according to one of the preceding claims, wherein the functions (122-126, 542) may be configured using static values and/or input data and wherein validating execution of the industrial application using a debug dataset (132, 544) without reconfiguring the functions (122-126, 542) comprises:
retaining the static values of the functions; and
injecting the debug dataset (132, 544) as the input data to validate at least one of the one or more functions.

7. A non-transitory computer readable medium encoded with executable instructions that when executed, cause at least one processor to carry out the method as claimed in at least one of the claims 1-6.

8. An apparatus for debugging an industrial application, wherein the industrial application is configured to control at least one process and asset (582) in an automation environment, the apparatus comprising:
at least one processor (515);
a memory unit (520) communicatively coupled to the processor, wherein the memory unit comprises an integrated development module (530) configured to generate an integrated development environment, wherein the integrated development environment is used for configuring one or more functions (122-126, 542) of the industrial application as an executable workflow whereby the industrial application is at least partly executed by the functions (122-126, 542) and validating execution of the industrial application using a debug dataset (132, 544) without reconfiguring the functions.

9. A system for debugging an industrial application, wherein the industrial application is configured to control at least one process and asset (582) in an automation environment, the system comprising:
at least one apparatus according to claim 8;
a computing platform (550) communicatively coupled to the at least one apparatus, wherein the computing platform is configured to:
associate the graphical elements with one or more parameters of the asset (582) and/or the process;
enable performance at least one operation of the application using the at least one apparatus employing the parameters, wherein the operation comprises at least one of modifying values of the parameters, changing the parameters, analyzing the parameters and transmitting the parameters.

10. The system according to claim 9, wherein the computing platform is configured to generate a debug dataset (132, 544) comprises a predetermined dataset associated with a predetermined operating condition of the asset (582) and/or the process.

11. The apparatus according to one of claims 8 to 10, wherein the integrated development environment enables:
execution of the one or more functions (122-126, 542) using the predetermined dataset,
determining an execution condition based on the execution of the functions, wherein the execution condition indicates condition of the asset (582) and/or process when the functions (122-126, 542) are executed using the predetermined dataset,
comparing the execution condition with the predetermined operating condition, and
determining at least one erroneous function of the one or more functions (122-126, 542) based on the comparison.

12. The apparatus according to one of claims 8 to 10, wherein the integrated development environment generates the debug dataset (132, 544) comprising an intermediate dataset generated from at least one function of the one or more functions.

13. The apparatus according to one of the claims 8 to 12, further comprising an interactive display unit configured to enable the debug dataset (132, 544) to be dropped onto at least one other function of the one or more functions.
